# EUROPEAN PATENT SPECIFICATION

(11) **EP 3 502 538 B1**
(45) Date of publication and mention of the grant of the patent: **22.09.2021**
(21) Application number: 17209728.9
(22) Date of filing: 21.12.2017
(51) Int. Cl.: F16P 3/14

(54) **METHOD FOR OPERATING A SAFETY SYSTEM FOR MEDIUM OR HIGH VOLTAGE SWITCHGEAR, AND SUCH SAFETY SYSTEM ITSELF**
VERFAHREN ZUM BETRIEB EINES SICHERHEITSSYSTEMS FÜR MITTEL- ODER HOCHSPANNUNGSSCHALTANLAGE UND SOLCH EIN SICHERHEITSSYSTEM SELBST
PROCÉDÉ POUR FAIRE FONCTIONNER UN SYSTÈME DE SÉCURITÉ POUR APPAREILLAGE DE COMMUTATION MOYENNE OU HAUTE TENSION ET UN TEL SYSTÈME DE SÉCURITÉ LUI-MÊME

(43) Date of publication of application: 26.06.2019
(73) Proprietor: ABB Schweiz AG, 5400 Baden (CH)
(72) Inventor: Wildermuth, Stephan, 69514 Laudenbach (DE)
(74) Representative: Maiwald Patent- und Rechtsanwaltsgesellschaft mbH

(56) References cited:
- EP-A1- 1 022 904
- EP-A1- 3 260 851
- DE-C1- 19 653 683
- Davis Instruments: "Applying Infrared Thermography to Predictive Maintenance", , 18 August 2016 (2016-08-18), XP002782330, Retrieved from the Internet: URL:http://www.davis.com/TechLibraryArticl e/7845 [retrieved on 2018-06-21]

## Description

The invention relates to method of a safety system for medium or high voltage switchgear with the use of infrared detecting or infrared imaging means, and such a safety system itself, according to the preamble of claims 1 and 4 .

### State of the art

Application of IR (infrared) cameras as such, for detection of human beings is well known, e.g. anonymized presence detection or intruder alarm. Although IR camera systems have been investigated for safety application in the context of industrial robots, practical application suffers from the much unstructured surrounding.

Furthermore, the usage of an IR camera for thermography and hot spot detection of industrial assets is a well-known technique. IR cameras are used for the manual inspection of electrical equipment, e.g. switchgear for time based maintenance. However continuous monitoring (=camera permanently mounted in switchgear) with IR cameras is not done today, mainly because of the high cost of the IR camera.

EP1022904A1 Describes that an arrangement comprises an electronic camera which is arranged within a closed casing of a switch device, in which switching contacts and a drive device for the activation of the switching contacts are housed. The camera is directed on at least one component essential for the function of the switch device. An interface is preferably provided for a transmission of image signals produced by the electronic camera to a bidirectional communications system for control of the switch. A circuit arrangement is arranged in the casing of the switch, for digitizing the image signals and for testing the digitized image data on contents relevant for the operation of the switch

The usage of IR single point sensors for continuous temperature measurement in electrical switchgear is well known. These sensor systems are directly installed in the switchgear and monitor the temperature at a specific location. These sensors return only a numerical value of the temperature to an operator. Furthermore, the maintenance on medium or high voltage switchgears has to consider aspects on occupational safety for human beings.

### Object of the invention

So it is the object of the invention, to enhance the reliability of detection of human action radius in a switchgear.

### Invention

For a method for operating a safety system for medium or high voltage switchgear, the aforesaid object is fulfilled in an inventive way, by the features of claim 1.

Further advantageous embodiments are given in the independent claims 2 to 4.

According to a safety system for medium or high voltage switchgear itself, the problem is solved by the features of claim 5.

Further concerning embodiments are given by the further depending claims.

According to a software program product, the invention can be implemented into a switchgear via a software program product, by the features of claim 10.

Basically, the invention according to the method is, that the infrared sensor means are operated in such, that image processing and pattern recognition means are operated in time modus, so that moving objects are detectable as in actual moving action, and that they are furthermore identifiable by automatic electronic comparison with image comparison data.

In an advantageous embodiment, the modus of identification detects automatically, if the moving object is
a) a part of the switchgear itself, for example a moving element of a drive or a lever, or
b) a loose part inside the switchgear or the aforesaid compartment, or
c) an entering human operator or parts of him/her,
and that actions for safe operation will be initiated by that automatically, by considering and differing the above mentioned cases a to c.

In a further advantageous embodiment, in case of detecting a human being or parts of it, the switchgear will initiate an alarm, or even trigger an immediate shut down and grounding of the switchgear in order to prevent an accident. According to a safety system, operated in the aforesaid way, the invention is, that the system is provided with infrared sensor means inside the operation compartment of the switchgear, by which image processing and pattern recognition means are operated with the aforesaid sensors in time modus, so that moving objects are detectable as in actual moving action, and that they are furthermore identifiable by automatic electronic comparison with image comparison data.

In a further advantageous embodiment, the sensor data are treated in a system controller as such, that the modus of identification detects automatically, if the moving object is
a) a part of the switchgear itself, for example a moving element of a drive or a lever, or
b) a loose part inside the switchgear or the aforesaid compartment, or
c) an entering human operator or parts of him/her,
and that actions for safe operation will be initiated by that automatically, by considering and differing the above mentioned cases a-c.

In a further advantageous embodiment, just in case of detecting a human being or parts of it, the aforesaid system controller of the switchgear will initiate an alarm, or even trigger an immediate shut down and grounding of the switchgear in order to prevent an accident.

By that, at retrofit implementation of this technology into a switchgear is as well possible.

According to a software program product, the invention is, that in order to operate the safety system with the method according to one of the claims 1 to 4, so that the aforesaid method and functionality can be implemented via a volatile software program product into the system controller of the switchgear.

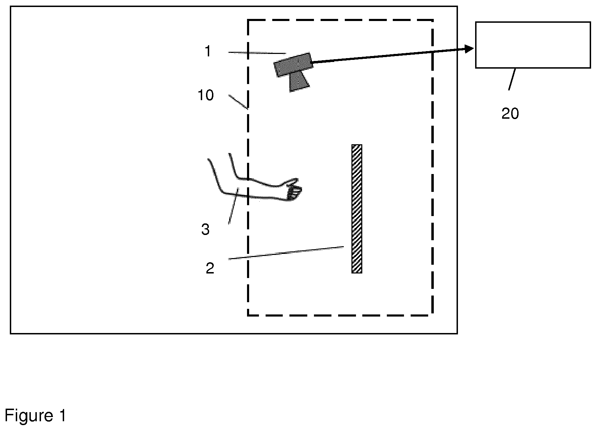

The operation is shown in the figure.

An IR camera 1 would be mounted in the medium voltage switchgear compartment 10, to monitor the temperature of the switchgear components. A typical temperature range for monitoring is 0°C to 150°C. Image processing in a system controller 20 would determine the relevant parts, e.g. bus bar 2. Alternatively the relevant part of the image could be identified by the service technician during installation of the sensor system. All objects in the field of view of the IR camera are static under normal operating conditions of the switchgear. No movement is expected.

Moving objects 3 could be detected in the image of the camera 1 by image processing and pattern recognition in the system controller 20. Such an event indicates an abnormal situation of the switchgear. For example loose parts could be the cause of such a situation. In the context of this invention, in particular moving human beings or body parts could be detected, e.g. if a person reaches into the switchgear with an arm. This could then lead to an action, e.g. raise an acoustic alarm to warn the person. Such a simple warning would most likely have prevented the above mentioned accidents happened within ABB. If needed the safety system could even trigger a forced shutdown and grounding of the switchgear to avoid an accident.

The IR camera 1 is better suited for this application in comparison to a regular visible light camera as it could operate without external illumination and in low light condition. Furthermore a visible light camera would only address the safety aspect, but would not be suitable for temperature supervision.

Further benefits are, that IR arrays sensors are being currently investigated for temperature monitoring of MV switchgear.

The additional feature of detection of moving objects (be it human beings or other objects) would require no additional sensor hardware. Only software (image processing and pattern recognition) and sufficient computational power would be required. Both would not significantly increase the overall cost of the sensors system.

Therefore an additional safety system could be offered to the end customer in addition to the asset monitoring functionality at virtually no extra cost. Furthermore, person safety is typically considered highest priority.

## Claims

1. A method for operating a safety system for medium or high voltage switchgear, wherein in the switchgear or in an inner compartment are arranged a number of switchgear components comprising at least switching and disconnecting means, busbars (2) and bushings, and also arranged in the switchgear or inner compartment is an infrared IR camera (1) configured to monitor temperatures of the switchgear components on the basis of acquired imagery, wherein the method comprises:
acquiring imagery in a field of view of the IR camera, **characterized in that** the method further comprises the steps of:
processing the acquired imagery in a system controller (20) to determine if there are one or more moving objects in the switchgear or inner compartment, the processing comprising image processing and pattern recognition; and
identifying a moving object, the identifying comprising comparing the acquired imagery with image comparison data.

2. Method according to claim 1, wherein the system controller is configured to determine if a moving object is:
a) a part of the switchgear,
b) a loose part inside the switchgear or inner compartment, or
c) a human being or body part of the human being.

3. Method according to claim 2, wherein different actions are initiated automatically for each of a), b) and c).

4. Method according to any of claims 2-3, wherein if the moving object is determined to be a human being or body part of a human being, an acoustic alarm is raised, and/or a forced shutdown and grounding of the switchgear is triggered.

5. A safety system for medium or high voltage switchgear, wherein in the switchgear or in an inner compartment are arranged a number of switchgear components comprising at least switching and disconnecting means, busbars (2) and bushings, wherein the safety system comprises:
- an infrared IR camera arranged in the switchgear or inner compartment; and
- a system controller;
wherein, the infrared IR camera (1) is configured to acquire imagery in a field of view of the IR camera;
wherein, the IR camera is configured such that temperatures of the switchgear components can be monitored on the basis of the acquired imagery, **characterized in that** the system controller is configured to process the acquired imagery to determine if there are one or more moving objects in the switchgear or inner compartment; the processing comprising image processing and pattern recognition; and identify a moving object, the identifying comprising comparing the acquired imagery with image comparison data.

6. Safety system according to claim 5, wherein the system controller is configured to determine if a moving object is:
a) a part of the switchgear,
b) a loose part inside the switchgear or inner compartment, or
c) a human being or body part of the human being.

7. Safety system according to claim 6, wherein different actions are initiated automatically for each of a), b) and c).

8. Safety system according to any of claims 6-7, wherein if the moving object is determined to be a human being or body part of a human being, an acoustic alarm is raised, and/or a forced shutdown and grounding of the switchgear is triggered.

9. A switchgear comprising a safety system according to any of claims 5-8.

10. A software program product comprising instructions which, when executed by a system controller, cause the system controller to perform the method according to any of claims 1-4.

## Patentansprüche

1. Verfahren zum Betreiben eines Sicherheitssystems für eine Mittel- oder Hochspannungsschaltanlage, wobei in der Schaltanlage oder in einem inneren Abteil mehrere Schaltanlagenkomponenten angeordnet sind, die zumindest Schalt- und Trennmittel, Sammelschienen (2) und Durchführungen umfassen, und in der Schaltanlage oder dem inneren Abteil außerdem eine Infrarot- bzw. IR-Kamera (1) angeordnet ist, ausgelegt zum Überwachen von Temperaturen der Schaltanlagenkomponenten auf der Grundlage erfasster Bilder, wobei das Verfahren Folgendes umfasst:
Erfassen von Bildern in einem Sichtfeld der IR-Kamera, **dadurch gekennzeichnet, dass** das Verfahren ferner die folgenden Schritte umfasst:
Verarbeiten der erfassten Bilder in einer Systemsteuerung (20), um zu bestimmen, ob es in der Schaltanlage oder dem inneren Abteil ein oder mehrere sich bewegende Objekte gibt, wobei das Verarbeiten Bildverarbeitung und Mustererkennung umfasst; und Identifizieren eines sich bewegenden Objekts, wobei das Identifizieren Vergleichen der erfassten Bilder mit Bildvergleichsdaten umfasst.

2. Verfahren nach Anspruch 1, wobei die Systemsteuerung dazu ausgelegt ist, zu bestimmen, ob es sich bei einem sich bewegenden Objekt um:
a) ein Teil der Schaltanlage,
b) ein loses Teil in der Schaltanlage oder dem inneren Abteil oder
c) einen Menschen oder einen Körperteil eines Menschen handelt.

3. Verfahren nach Anspruch 2, wobei für a), b) und c) automatisch unterschiedliche Aktionen initiiert werden.

4. Verfahren nach einem der Ansprüche 2-3, wobei, falls bestimmt wird, dass es sich bei dem sich bewegenden Objekt um einen Menschen oder einen Körperteil eines Menschen handelt, ein akustischer Alarm ausgelöst wird und/oder eine Zwangsabschaltung und Erdung der Schaltanlage ausgelöst wird.

5. Sicherheitssystem für eine Mittel- oder Hochspannungsschaltanlage, wobei in der Schaltanlage oder in einem inneren Abteil mehrere Schaltanlagenkomponenten angeordnet sind, die zumindest Schalt- und Trennmittel, Sammelschienen (2) und Durchführungen umfassen, wobei das Sicherheitssystem Folgendes umfasst:
- eine Infrarot- bzw. IR-Kamera, die in der Schaltanlage oder dem inneren Abteil angeordnet ist; und
- eine Systemsteuerung;
wobei die Infrarot- bzw. IR-Kamera (1) zum Erfassen von Bildern in einem Sichtfeld der IR-Kamera ausgelegt ist; wobei die IR-Kamera derart ausgelegt ist, dass Temperaturen der Schaltanlagenkomponenten auf der Grundlage der erfassten Bilder überwacht werden können, **dadurch gekennzeichnet, dass** die Systemsteuerung ausgelegt ist zum Verarbeiten der erfassten Bilder, um zu bestimmen, ob es in der Schaltanlage oder dem inneren Abteil ein oder mehrere sich bewegende Objekte gibt; wobei das Verarbeiten Bildverarbeitung und Mustererkennung umfasst; und Identifizieren eines sich bewegenden Objekts, wobei das Identifizieren Vergleichen der erfassten Bilder mit Bildvergleichsdaten umfasst.

6. Sicherheitssystem nach Anspruch 5, wobei die Systemsteuerung dazu ausgelegt ist, zu bestimmen, ob es sich bei einem sich bewegenden Objekt um:
a) ein Teil der Schaltanlage,
b) ein loses Teil in der Schaltanlage oder dem inneren Abteil oder
c) einen Menschen oder einen Körperteil eines Menschen handelt.

7. Sicherheitssystem nach Anspruch 6, wobei für a), b) und c) automatisch unterschiedliche Aktionen initiiert werden.

8. Sicherheitssystem nach einem der Ansprüche 6-7, wobei, falls bestimmt wird, dass es sich bei dem sich bewegenden Objekt um einen Menschen oder einen Körperteil eines Menschen handelt, ein akustischer Alarm ausgelöst wird und/oder eine Zwangsabschaltung und Erdung der Schaltanlage ausgelöst wird.

9. Schaltanlage, die ein Sicherheitssystem nach einem der Ansprüche 5-8 umfasst.

10. Softwareprogrammprodukt, das Anweisungen umfasst, die bei Ausführung durch eine Systemsteuerung bewirken, dass die Systemsteuerung das Verfahren nach einem der Ansprüche 1-4 durchführt.

## Revendications

1. Procédé destiné à faire fonctionner un système de sécurité pour appareillage de commutation moyenne ou haute tension, un certain nombre de composants d'appareillage de commutation, comprenant au moins des moyens de commutation et de sectionnement, des barres de distribution (2) et des traversées, étant disposés dans l'appareillage de commutation ou dans un compartiment interne, et une caméra infrarouge, IR (1), configurée pour surveiller des températures des composants d'appareillage de commutation sur la base d'images acquises, étant également disposée dans l'appareillage de commutation ou le compartiment interne, le procédé comprenant :
l'acquisition d'images dans un champ de vision de la caméra IR, **caractérisé en ce que** le procédé comprend en outre les étapes de :
traitement des images acquises dans un contrôleur système (20) pour déterminer s'il y a un ou plusieurs objets mobiles dans l'appareillage de commutation ou le compartiment interne, le traitement comprenant un traitement d'image et une reconnaissance de motif ; et
identification d'un objet mobile, l'identification comprenant la comparaison des images acquises avec des données de comparaison d'images.

2. Procédé selon la revendication 1, dans lequel le contrôleur système est configuré pour déterminer si un objet mobile est :
a) une partie de l'appareillage de commutation,
b) une pièce libre à l'intérieur de l'appareillage de commutation ou du compartiment interne, ou
c) un être humain ou une partie du corps de l'être humain.

3. Procédé selon la revendication 2, dans lequel différentes actions sont initiées automatiquement pour chacun des cas a), b) et c).

4. Procédé selon l'une quelconque des revendications 2 et 3 dans lequel, s'il est déterminé que l'objet mobile est un être humain ou une partie du corps d'un être humain, une alarme sonore est émise, et/ou un arrêt forcé et une mise à la terre de l'appareillage de commutation sont déclenchés.

5. Système de sécurité pour appareillage de commutation moyenne ou haute tension, un certain nombre de composants d'appareillage de commutation, comprenant au moins des moyens de commutation et de sectionnement, des barres de distribution (2) et des traversées, étant disposés dans l'appareillage de commutation ou dans un compartiment interne, le système de sécurité comprenant :
- une caméra infrarouge, IR, disposée dans l'appareillage de commutation ou le compartiment interne ; et
- un contrôleur système ;
dans lequel la caméra infrarouge, IR (1) est configurée pour acquérir des images dans un champ de vision de la caméra IR ;
dans lequel la caméra IR est configurée de telle sorte que des températures des composants d'appareillage de commutation peuvent être surveillées sur la base des images acquises, **caractérisé en ce que**
le contrôleur système est configuré pour traiter les images acquises pour déterminer s'il y a un ou plusieurs objets mobiles dans l'appareillage de commutation ou le compartiment interne, le traitement comprenant un traitement d'image et une reconnaissance de motif, et identifier un objet mobile, l'identification comprenant la comparaison des images acquises avec des données de comparaison d'images.

6. Système de sécurité selon la revendication 5, dans lequel le contrôleur système est configuré pour déterminer si un objet mobile est :
a) une partie de l'appareillage de commutation,
b) une pièce libre à l'intérieur de l'appareillage de commutation ou du compartiment interne, ou
c) un être humain ou une partie du corps de l'être humain.

7. Système de sécurité selon la revendication 6, dans lequel différentes actions sont initiées automatiquement pour chacun des cas a), b) et c).

8. Système de sécurité selon l'une quelconque des revendications 6 et 7 dans lequel, s'il est déterminé que l'objet mobile est un être humain ou une partie du corps d'un être humain, une alarme sonore est émise, et/ou un arrêt forcé et une mise à la terre de l'appareillage de commutation sont déclenchés.

9. Appareillage de commutation comprenant un système de sécurité selon l'une quelconque des revendications 5 à 8.

10. Produit-programme informatique comprenant des instructions qui, lorsqu'elles sont exécutées par un contrôleur système, conduisent le contrôleur système à effectuer le procédé selon l'une quelconque des revendications 1 à 4.
